# NEW EUROPEAN PATENT SPECIFICATION

(11) **EP 0 902 423 B2**
(45) Date of publication and mention of the opposition decision: **29.10.2008**
(45) Mention of the grant of the patent: 25.07.2001
(21) Application number: 98303279.8
(22) Date of filing: 28.04.1998
(51) Int. Cl.: G11B 7/00, G11B 7/09

(54) **Objective lens driving device for an optical pick-up unit**
Objektivlinsenantriebsvorrichtung für optische Abtasteinheit
Dispositif d'entraînement de la lentille d'objectif pour unité de lecture optique

(30) Priority: 27.08.1997 KR 9723396
(43) Date of publication of application: 17.03.1999
(73) Proprietor: SAMSUNG ELECTRONICS CO., LTD., Suwon-City, Kyungki-do (KR)
(72) Inventor: Bae, Jung-kook, Paldal-gu, Suwon-city, Kyungki-do (KR)
(74) Representative: Robinson, Ian Michael

(56) References cited:
- EP-A- 0 617 419
- EP-A- 0 660 312
- EP-A1- 0 464 912
- JP-A- 8 147 730
- US-A- 5 526 340
- US-A- 5 604 641

## Description

The present invention relates to an objective lens driving device for an optical pick-up unit, and more particularly, to an objective lens driving device for an optical pick-up unit having an improved structure to facilitate installation of electrical connections between a control signal source and focusing and tracking coils.

Generally, in optical recording/reproducing units using an optical disk, such as a laser disk player, a compact disk player or the like, an optical pick-up unit is installed for irradiating an optical beam onto a disk surface and detecting the optical beam reflected from the disk surface. The optical pick-up unit detects the optical beam reflected from the disk surface in the form of binary signals. For a successful reproducing of recorded information, the beam focused onto the optical disk should be precise, and the focused beam should accurately trace the tracks formed on the optical disk. Usually, driving an objective lens to adjust the focus position of the beam in the direction of the optical axis is called focusing, driving the objective lens to adjust the focus position of the beam in the radial direction for the beam to accurately trace the tracks is called tracking. Therefore, the optical pick-up unit employs devices for driving the objective lens in order to perform such focusing and tracking.

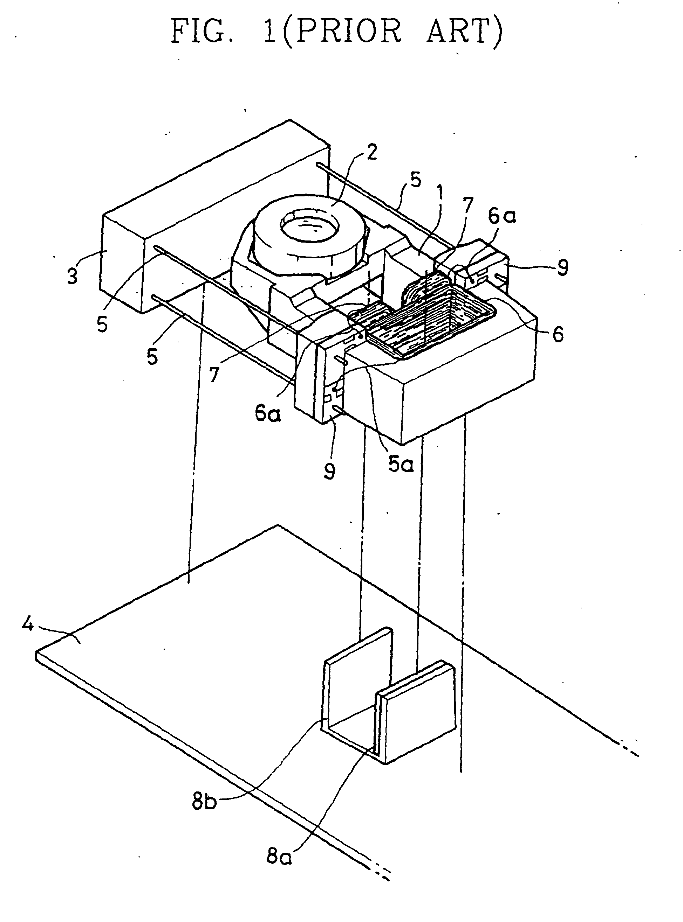

Referring to Figure 1 showing a conventional objective lens driving device, a movable supporter 1 carrying an objective lens 2 is supported by elastic suspensions 5 extending from a holder 3 fixed on a base 4. A focusing coil 6 and a tracking coil 7 are installed on the movable supporter 1. Once a control current is fed into the focusing coil 6 or the tracking coil 7, magnetic field is generated by the focusing coil 6 or the tracking coil 7. Therefore, the magnetic field interacts with the magnetic field of a permanent magnet 8a and a yoke 8b which are fixed on the base 4, and accordingly, the movable supporter 1 moves vertically or horizontally. The focusing coil 6 and the tracking coil 7 are supplied with a control current via a circuit board 9.

However, in order to assemble the objective lens driving device having such a structure as described above, since the circuit board 9 is assembled to the movable supporter 1 and the leads 5a and 6a from the focusing coil 6 and the tracking coil 7 must be soldered respectively to connection portions of the circuit board 9, there are problems in that the assembly process is difficult in itself and the automatization of the assembly process is difficult as well.

EP-A-0660312 describes an objective lens drive device comprising a lens holder bearing a lens, and tracking and focusing coils both wound around a single coil bobbin with projecting terminals around which the ends of the coils are wound, to be electrically connected to electrical terminals protruding from the rear of a fixed holder by means of elastic supporting members.

With a view to solve or reduce the above problems, it is an aim of embodiments of the present invention to provide an objective lens driving device having an improved structure to facilitate the assembly of electrical connections between a control signal source and focusing and tracking coils with ease.

According to the present invention there is provided an objective lens driving device including a base, a permanent magnet and a yoke which are installed on the base for forming a magnetic field, a holder fixed on the base, and a movable supporter on which an objective lens is mounted and which is provided with focusing and tracking coils each having lead wires respectively, the objective lens driving device comprising electrical terminals, a plurality of suspensions for supporting the movable supporter, and for electrically connecting the focusing coil and the tracking coil with respective control signal sources, one end of each of the suspensions being fixed to the holder and being electrically connected to the corresponding electrical terminals and the other end being electrically connected to corresponding ends of the lead wires characterised in that said movable supporter comprises separate first and second movable supporters and first and second protrusions formed on said first and second movable supporters respectively around which lead wires of the tracking coil and the focusing coil are wound respectively.

According to the present invention there is further provided a method of assembling an objective lens driving device including a base, a permanent magnet and a yoke, comprising installing the magnet and yoke on the base for forming a magnetic field, fixing on the base a holder with electrical terminals and supporting a movable supporter, within which is mounted an objective lens, by means of a plurality of suspensions, said movable supporter being provided with tracking coil and focusing coil having lead wires, electrically connecting said suspensions between said lead wires and said electrical terminals, characterised in that the method includes the steps of winding the tracking coil around a first movable supporter and the lead wire thereof around a first protrusion of said first movable supporter, winding the focusing coil around a separate, second movable supporter and the lead wire thereof around a second protrusion of said second movable supporter and thereafter bonding said first and second movable supporters together to form said movable supporter.

Said electrical terminals are preferably provided at a side portion of the holder.

For a better understanding of the invention, and to show how embodiments of the same may be carried into effect, reference will now be made, by way of example, to the accompanying diagrammatic drawings, in which:
Figure 1 is a partially exploded perspective view illustrating a conventional objective lens driving device of an optical pick-up unit;
Figure 2 is a partially exploded perspective view illustrating an embodiment of an objective lens driving device of an optical pick-up unit according to the present invention; and
Figure 3 is an exploded perspective view of the first and second movable supporter shown in Figure 2.

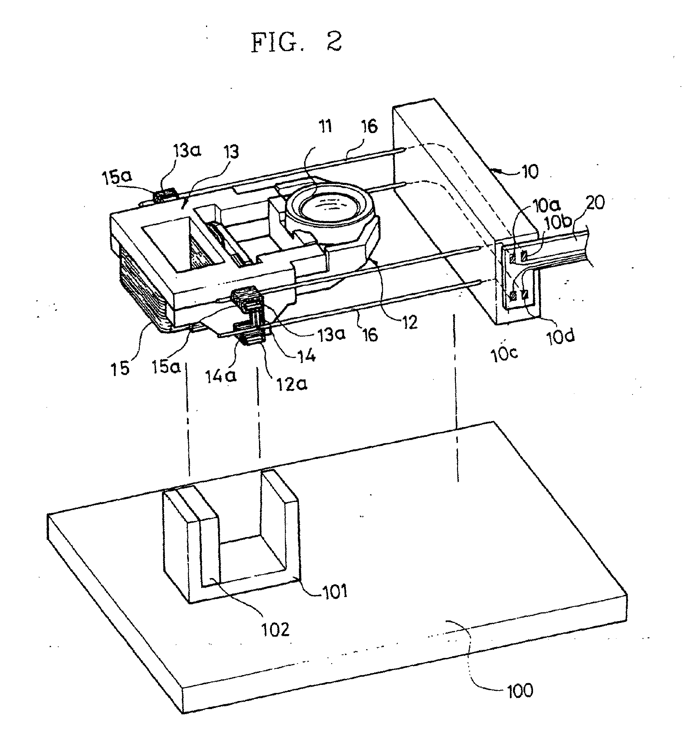

Referring to Figure 2, in a preferred embodiment of an objective lens driving device according to the present invention, a permanent magnet 102 and a yoke 101 for forming a magnetic circuit are fixed on a base 100. A holder 10 provided with electrical terminals 10a through 10d at a side thereof is fixed on the base 100, a first movable supporter 12 and a second movable supporter 13 are supported by elastic suspensions 16, one end of each being fixed to the holder 10.

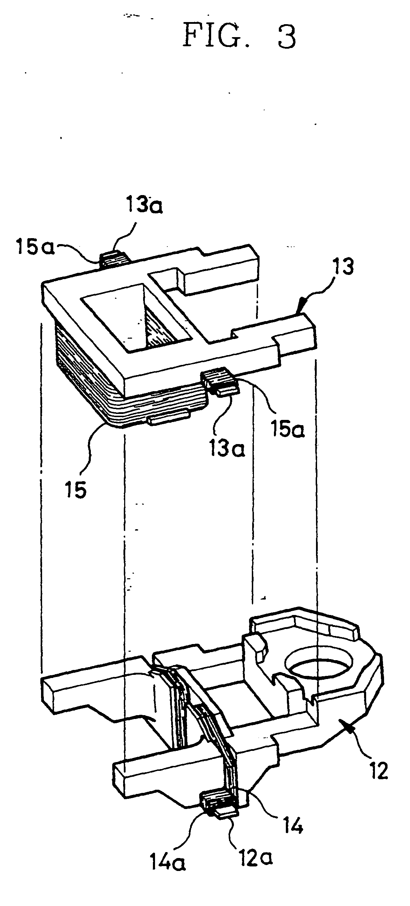

As shown in Figure 3, the first movable supporter 12 and the second movable supporter 13 can be separated, and may be bonded by an adhesive at the time of assembly. An objective lens 11 is mounted on the first movable supporter 12 and a tracking coil 14 is also installed to the first movable supporter 12. A focusing coil 15 is installed to the second movable supporter 13.

A pair of first protrusions 12a around which lead wires 14a of the tracking coil 14 are wound are formed at both sides of the first movable supporter 12 and a pair of second protrusions 13a around which lead wires 15a of the focusing coil 15 are wound are formed at both sides of the second movable supporter 13. One end of each suspension 16 fixed to the holder 10 are electrically connected to the respective electrical terminals 10a through 10d, and the other end is soldered to corresponding ends of the lead wires 14a and 15a, respectively wound around the first and second protrusions 12a and 13a.

Reference numeral 20 denotes lines connecting the electrical terminals 10a through 10d with a control signal source (not shown).

When the objective lens driving device having the structure as described above is assembled, the tracking coil 14 is wound by a conventional coil winding machine around a part of the first movable supporter 12 on which the objective lens 11 is mounted, and then the lead wires 14a of the tracking coil 14 are wound around the first protrusions 12a. In a similar manner, the focusing coil 15 is wound around a part of the second movable supporter 13 and the lead wires of the focusing coil 15 are wound around the second protrusions 13a. Subsequently, the first and second movable supporters 12 and 13 are bonded.

Then, after one end of each suspensions 16 is fixed to the holder 10 fixed on the base 100, the other end is soldered to corresponding ends of lead wires 14a and 15a wound around the first and second protrusions 12a and 13a, respectively. Hence, the current supplied to the electrical terminals 10a through 10d can be supplied to the tracking coil 14 and the focusing coil 15 via the suspensions 16. In addition, the first and second movable supporter 12 and 13 are elastically supported by the suspensions 16, and are movable horizontally and vertically with respect to the holder 10.

In the assembly process of the objective lens driving device, the electrical connections between the control signal source and the tracking and focusing coils can be performed with ease. That is to say, there is no need to solder the lead wires of the tracking and focusing coils to the connection portions of the circuit board 9 (Refer to Figure 1) as in the conventional driving device, and merely the lead wires 14a and 15a wound around the first and second protrusions 12a and 13a are soldered respectively to the nearby part of the suspensions 16. The assembly process can be performed by an automated system instead of manual labour.

In addition, there is no need to install the separately prepared circuit board 9 (Refer to Figure 1) for electrically connecting the tracking coil and the focusing coil with the control signal source.

## Claims

1. An objective lens driving device including a base (100), a permanent magnet (102) and a yoke (101) which are installed on the base (100) for forming a magnetic field, a holder (10) fixed on the base, and a movable supporter (12, 13) on which an objective lens (11) is mounted and which is provided with focusing (15) and tracking (14) coils each having lead wires (15a, 14a) respectively, the objective lens driving device comprising electrical terminals (10a-10d),
a plurality of suspensions (16) for supporting the movable supporter (12, 13), and for electrically connecting the focusing coil (15) and the tracking coil (14) with respective control signal sources, one end of each of the suspensions (16) being fixed to the holder (10) and being electrically connected to the corresponding electrical terminals (10a-10d) and the other end being electrically connected to corresponding ends of the lead wires, **characterised in that** said movable supporter comprises separate first and second movable supporters (12, 13) and first and second protrusions (12a, 13a) formed on said first and second movable supporters (12, 13) respectively around which lead wires (14a, 15a) of the tracking coil (14) and the focusing coil (15) are wound respectively.

2. The objective lens driving device as claimed in claim 1, **characterised in that** the electrical terminals (10a-10d) are provided at a side portion of the holder (10).

3. A method of assembling an objective lens driving device including a base (100), a permanent magnet (102) and a yoke (101, comprising installing the magnet (102) and yoke (101), on the base (100) for forming a magnetic field, fixing on the base a holder (10) with electrical terminals (10a-10d) and supporting a movable supporter (12, 13), which is mounted an objective lens (11), by means of a plurality of suspensions (16), said movable supporter being provided with tracking coil (14) and focusing coil (15) having lead wires (14a, 15a) respectively, electrically connecting said suspensions (16) between said lead wires and said electrical terminals, **characterised in that** the method includes the steps of winding the tracking coil (14) around a first movable supporter (12) and the lead wire (14a) thereof around a first protrusion (12a) of said first movable supporter (12), winding the focusing coil (15) around a separate, second movable supporter (13) and the lead wire (15a) thereof around a second protrusion (13a) of said second movable supporter (13) and thereafter bonding said first and second movable supporters (12, 13) together to form said movable supporter.

## Patentansprüche

1. Objektivlinsen-Antriebsvorrichtung, die einen Untersatz (100), einen Permanentmagneten (102) und ein Joch (101), die an dem Untersatz (100) Installiert sind, um ein Magnetfeld zu erzeugen, einen an dem Untersatz befestigten Halter (10) und einen beweglichen Träger (12,13) enthält, auf dem eine Objektivlinse (11) angabracht ist, und der mit einer Fokussler- (15) und einer Nachführspule (14) versehen ist die jeweils Zuführungsleitungen (15a,14a) aufweisen, wobei die Objektivlinsen-Antriebsvorrichtung elektrische Anschlüsse (10a-10d) umfasst,
eine Vielzahl von Aufhängungen (16), die den beweglichen Träger (12,13) halten und die Fokussierspule (15) sowie die Nachführspule (14) elektrisch mit entsprechenden Steuersignalquellen verbinden, wobei ein Ende jeder der Aufhängungen (16) an dem Halter (10) befestigt und elektrisch mit den entsprechenden elektrischen Anschlüssen (10a-10d) verbunden ist und das andere Ende elektrisch mit entsprechenden Enden der Zuführungsleitungen verbunden ist, **dadurch gekennzeichnet, dass** der bewegliche Träger einen separaten ersten und zweiten beweglichen Träger (12,13) sowie einen ersten und einen zweiten Vorsprung (12a, 13a) umfasst, die an dem ersten bzw, dem zweiten beweglichen Träger (12,13) ausgebildet sind und um die Zuführungsieitungen (14a,15a) der Nachführspule (14) bzw. der Fokussierspule (15) herumgewickelt sind.

2. Objektivlinsen-Steuervorrichtung nach Anspruch 1, **dadurch gekennzeichnet, dass** die elektrischen Anschlüsse (10a-10d) an einem Seitenabschnitt des Halters (10) vorhanden sind.

3. Verfahren zum Zusammenbau einer Objektivlinsen-Steuervorrichtung, die einen Untersatz (100), einen Permanentmagneten (102) und ein Joch (101) enthält, das das instellieren des Magneten (102) und des Jochs (101) an dem Untersatz (100) zum Erzeugen eines Magnetfeldes, das Befestigen eines Halters (10) mit elektrischen Anschlüssen (10a-10d) an dem Untersatz sowie das Halten eines beweglichen Trägers (12,13), der an einer Objektivlinse (11) angebracht ist, mittels einer Vielzahl von Aufhängungen (16), wobei der bewegliche Träger mit einer Nachführspule (14) und einer Fokussierspule (15) versehen ist, die jeweils Zuführungsleitungen (14a,15a) aufweisen, das elektrische Schalten der Aufhängungen (16) zwischen die Zuführungsleitungen und die elektrischen Anschlüsse umfasst, **dadurch gekennzeichnet, dass** das Verfahren die Schritte des Wickelns der Nachführspule (14) um einen ersten beweglichen Träger (12) und der Zuführungsleitung (14a) derselben um einen ersten Vorsprung (12a) des ersten beweglichen Tragers (12), des Wickelns der Fokussierspule (15) um einen separaten, zweiten beweglichen Träger (13) und der Zuführungsleitung (15a) derselben um einen zweiten Vorsprung (13a) des zweiten beweglichen Trägers (13) und des anschließenden Verkiebens des ersten und des zweiten beweglichen Trägers (12,13) miteinander zum Herstellen des beweglichen Trägers einschließt.

## Revendications

1. Dispositif d'entraînement d'objectif incluant une base (100), un aimant permanent (102) et une culasse (101) qui sont disposés sur la base (100) pour former un champ magnétique, un support (10) fixé la base et un équipage mobile (12, 13) sur lequel est monté un objectif (11) et qui est pourvu de bobines de mise au point (15) et de suivi (14) comprenant chacune des fils conducteurs (15a, 14a) respectivement, le dispositif d'entraînement d'objectif comprenant des bornes électriques (10a, 10d),
une pluralité de suspensions (16) pour supporter l'équipage mobile (12, 13) et pour relier électriquement la bobine de mise au point (15) et la bobine de suivi (14) avec des sources de signaux de commande respectives, une extrémité de chacune des suspensions (16) étant fixée au support (10) et étant reliée électriquement aux bornes électriques correspondantes (10a, 10d) et l'autre extrémité étant reliée électriquement à des extrémités correspondantes des fils conducteurs, **caractérisé en ce que** ledit équipage mobile comprend des premier et second équipages mobiles séparés (12, 13), et des première et seconde saillies (12a, 13a) formées sur lesdits premier et second équipages mobiles (12, 13), respectivement, autour desquels sont respectivement enroulés les fils conducteurs (14a, 15a) de la bobine de suivi (14) et respectivement de la bobine de mise au point (15).

2. Dispositif d'entraînement d'objectif selon la revendication 1, **caractérisé en ce que** les bornes électriques (10a, 10d) sont réalisée sur une partie latérale du support (10).

3. Procédé pour assembler un dispositif d'entraînement d'objectif incluant une base (100), un aimant permanent (102) et une culasse (101) comprenant la mise en place de l'aimant (102) et de la culasse (101) sur la base (100) pour former un champ magnétique, la fixation sur la base d'un support (10) avec des bornes électriques (10a, 10d), le support d'un équipage mobile (12, 13) sur lequel est monté un objectif (11) au moyen d'une pluralité de suspensions (16), ledit équipage mobile étant pourvu d'une bobine de suivi (14) et d'une bobine de mise au point (15) possédant respectivement des fils conducteurs (14a, 15a), la connexion électrique desdites suspensions (16) entre lesdits fils conducteurs et lesdites bornes électriques, **caractérisé en ce que** le procédé comprend les étapes consistant à enrouler la bobine de suivi (14) autour d'un premier équipage mobile (12) et son fil conducteur (14a) autour d'une première saillie (12a) dudit premier équipage mobile (12), enrouler la bobine de mise au point (15) autour d'un second équipage mobile séparé (13) et son fil conducteur (15a) autour d'une seconde saillie (13a) dudit second équipage mobile (13) et ensuite lier ensemble lesdits premier et second équipages mobiles (12, 13) pour former ledit équipage mobile.
